# EUROPEAN PATENT SPECIFICATION

(11) **EP 3 623 526 B1**
(45) Date of publication and mention of the grant of the patent: **01.11.2023**
(21) Application number: 19196106.9
(22) Date of filing: 09.09.2019
(51) Int. Cl.: D21F 3/10

(54) **SEALING ARRANGEMENT AND SUCTION ROLL OF A FIBRE WEB MACHINE, EQUIPPED WITH THE SEALING ARRANGEMENT**
DICHTUNGSANORDNUNG UND SAUGWALZE EINER FASERBAHNMASCHINE MIT DER DICHTUNGSANORDNUNG
AGENCEMENT D'ÉTANCHÉITÉ ET ROULEAU D'ASPIRATION D'UNE MACHINE À TOILE DE FIBRES ÉQUIPÉE DE L'AGENCEMENT D'ÉTANCHÉITÉ

(30) Priority: 11.09.2018 FI 20185755
(43) Date of publication of application: 18.03.2020
(73) Proprietor: Valmet Technologies Oy, 02150 Espoo (FI)
(72) Inventor: GRAICHEN, René, 37470 VESILAHTI (FI); KAASALAINEN, Mikko, 41330 VIHTAVUORI (FI); KETTUNEN, Heikki, 02730 ESPOO (FI); KONTTO, Antti, 04330 LAHELA (FI); KOVANEN, Risto, 40640 JYVÄSKYLÄ (FI); NIEMINEN, Kaale, 40340 JYVÄSKYLÄ (FI); NYLUND, Markus, 01370 VANTAA (FI); PARVIAINEN, Seppo K, 40200 JYVÄSKYLÄ (FI); PITKÄNEN, Tatu, 04460 NUMMENKYLÄ (FI); TUHKALA, Markku, 40900 SÄYNÄTSALO (FI)
(74) Representative: TBK

(56) References cited:
- WO-A1-03/056215
- DE-A1-102004 059 028
- US-B2- 7 144 477

## Description

The invention relates to a sealing arrangement, which includes a seal holder and a seal adapted in the seal holder as well as indicator means adapted to define the wear margin of the seal. Moreover, the invention relates to a suction roll of a fibre web machine, equipped with the sealing arrangement.

Document EP 1 141 481 B1 presents a sealing arrangement, the wear of which can be monitored. To monitor the wear, the sealing arrangement includes indicator means. One application of the sealing arrangement presented is a suction roll of a fibre web machine, where the suction roll has one or more sealing arrangements. The suction roll has a perforated shell, inside which is a suction box. The sealing arrangement includes a seal holder and a seal adapted in the seal holder. The seal holder is supported to the suction box so that the seal extends to the inner surface of the shell. The sealing arrangement usually also includes loading devices to load the seal. Some sealing arrangements also include locking means for setting the seal slightly out of contact with the shell. The sealing arrangements delimit the zone where the negative pressure effect of the suction box extends to the surface of the shell via the holes in the shell.

The structure of known indicator means is complex, but the indication is still inaccurate. In this case, information on the wear margin of the seal is uncertain, which may lead to the premature replacement of the seal or to the seal wearing out. Moreover, indicator means are sensitive to failures, and they are only applicable to certain types of sealing arrangements.

Document US 7 144 477 B2 discloses a seal strip for a hollow circular cylindrical screening device, which screening device is intended to be used in a paper or cardboard machine for the production of paper or cardboard. The seal strip exhibits indicator means for indicating wear of the seal strip. The indicator means is arranged to continuously give a measure of a remaining wear allowance and a wear rate of the seal strip. Visual contact between the sensor and the indicator is required.

Document DE 10 2004 059 028 A1 discloses a sealing strip system for the suction zone of a suction roller, where the sealing strip has a wear volume gradually abraded by tribological contact with the roller, includes a wear indicating system consisting of a measuring device with first and second sections and at least one indicator, which is incorporated in the sealing strip to represent a discrete level of wear. The indicator can produce an interaction between the two sections, and when the wear level is reached by the indicator a change in the interaction between the sections is caused.

Document WO 03/056215 A1 relates to a seal for a suction roll of a paper or board machine. The seal is being placed inside a rotating shell of the suction roll and has a system for monitoring the wear of the seal disposed in connection with the seal. The monitoring system comprises means for monitoring the wear of the seal. The means for monitoring the wear of the seal comprise an arrangement for determining the need for replacement of the seal based on information about the wear of the seal without interrupting the operation of the suction roll.

The object of the present invention is to accomplish a novel kind of sealing arrangement, where the wear margin of the seal can be detected in a simpler manner than before but more accurately than earlier.
to the object of the invention is achieved by a sealing arrangement according to claim 1.

In the sealing arrangement according to the invention, the indicator means are of a new kind, and they have been arranged in a novel and surprising manner. Durable and simple components are used to achieve accurate indication, in which case it is easy to determine the presumable lifetime of a seal. In this case, the replacement of the seal can be planned in advance, whereby premature replacement and on the other hand wearing out can be avoided. At the same time, useful information on the functioning of the suction roll is also obtained.

The invention is described below in detail by making reference to the enclosed drawings that illustrate some embodiments of the invention, in which:
- Figure 1: shows a press position of a fibre web machine, to which the suction roll according to the invention has been arranged,
- Figure 2: shows the suction roll according to the invention in cross section,
- Figure 3a: shows one application of the sealing arrangement according to the invention,
- Figure 3b: shows another application of the sealing arrangement according to the invention,
- Figure 4a: shows the seal according to the invention in cross section,
- Figure 4b: shows part of the seal of Figure 4a.

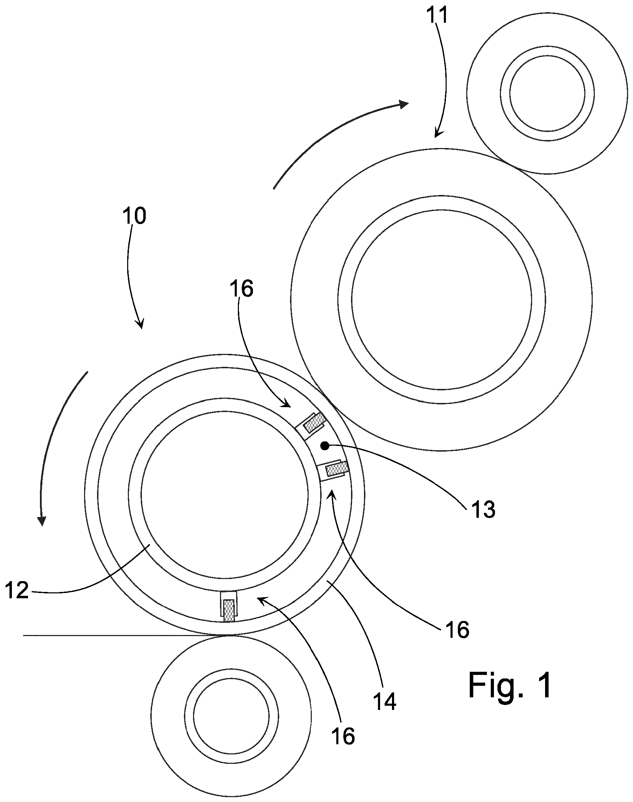

Figure 1 shows an example position of a fibre web machine, where the suction roll 10 is in a nip contact with a press roll 11. Water is removed from the fibre web in the nip, and the water moves to the bores on the shell of the suction roll, more generally expressed to the open surface of the suction roll. The transfer of water is intensified by means of negative pressure effect, which is created by means of a suction box 12 adapted inside the suction roll. The negative pressure is created into the suction box by some suitable device, which is usually located outside the suction box. By using one or more sealing arrangements, it is possible to arrange a zone 13 in the nip area or also before the nip, which zone 13 has a negative pressure effect. After the zone 13, water is removed from the open surface of the suction roll usually by gravity. The suction roll can also be used for web control, such as for guiding the fibre web to follow a certain fabric.

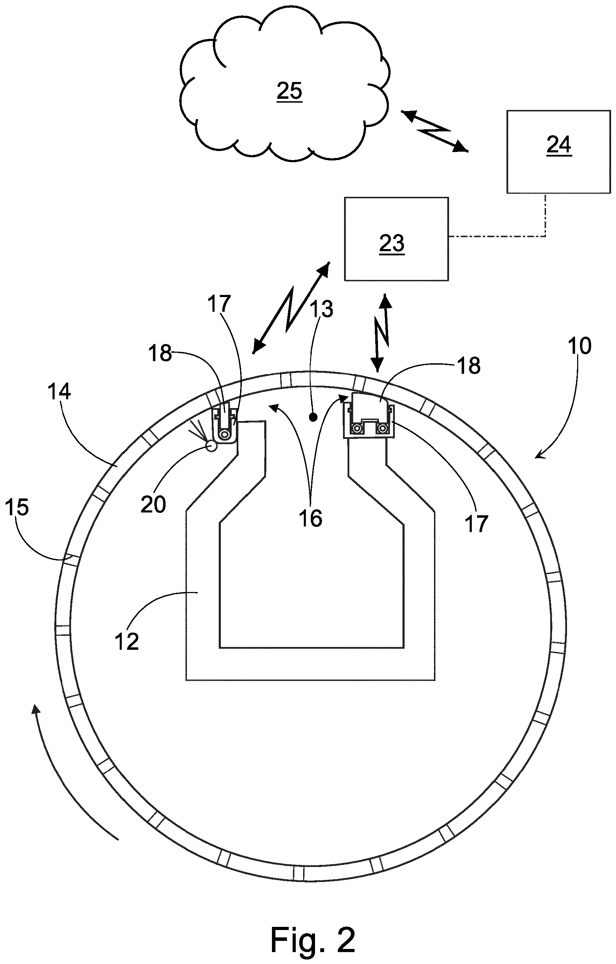

Figure 2 shows a suction roll 10 of a fibre web machine, equipped with the sealing arrangement. The suction roll 10 includes a perforated shell 14 supported in a rotating manner as well as a suction box 12 adapted inside the suction roll 10. Figure 2 only shows some of the holes 15 on the shell 14. The suction box 12 has at least one sealing arrangement 16 in order to delimit the negative pressure effect. Two sealing arrangements are typically used, and the above-mentioned zone 13 is formed between these. By using several sealing arrangements, it is possible to delimit several zones. Each sealing arrangement includes a seal holder 17 and a seal 18 adapted in the seal holder 17 and extending to the shell 14. Here, the seal holder 17 is supported to the suction box 12.

Both the seal holder and the seal extend essentially over the length of the entire suction box. Separate end seals are used at the ends of the suction box, where the sealing arrangement according to the invention can also be applied (not presented) . The sealing arrangement also includes indicator means 19 adapted to define the wear margin of the seal 18. The indicator means provide information on the wear margin, and it is hence possible to continuously define the remaining lifetime of the seal. A sudden change in the wear margin can also be used for detecting potential disturbance situations. Water is usually showered to the inner surface of the shell to lubricate the seal. Water reduces friction and hence slows down the wear of the seal. A lubrication shower pipe 20 is shown in Figure 2. Moreover, the lubrication water can also be led along the seal or through the seal.

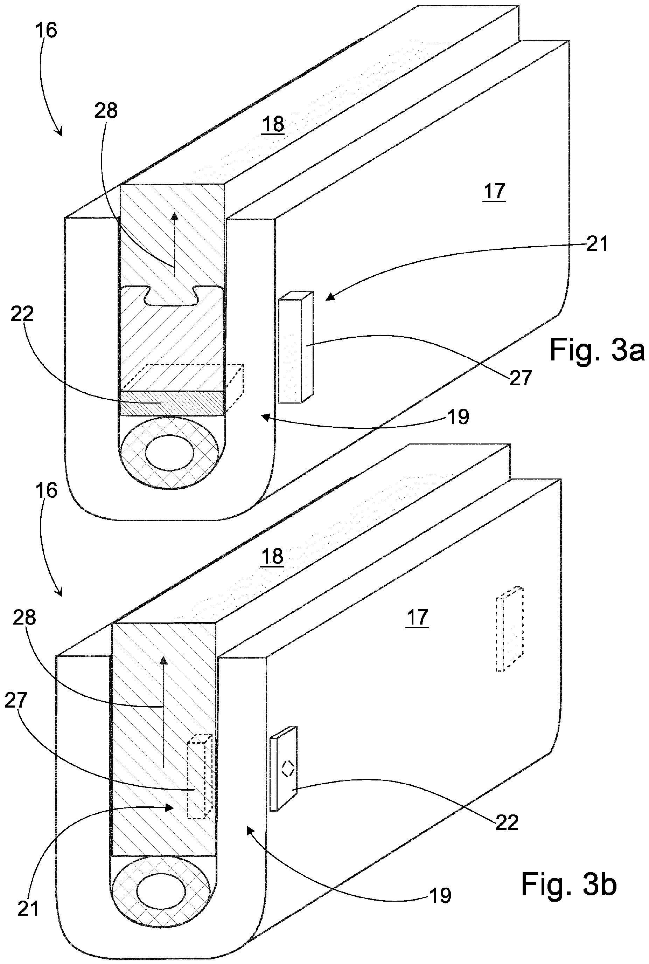

In the invention, the indicator means 19 include indicator material 21 and a sensor 22 adapted to detect the indicator material 21, where one of those is arranged in connection with the seal 18 and the other of those is arranged in connection with the seal holder 17 (Figures 3a and 3b). The indicator material and the sensor make up a functional pair, the features and joint functioning of which have been defined and are hence known. In this case, the functioning of the indicator means remains unchanged irrespective of the features of the sealing arrangement and in general irrespective of the features of the suction roll. In this way, the position of the seal with respect to the seal holder is known precisely. When the seal wears, the position of the seal changes, and this can subsequently be used for defining the wear margin of the seal. In practice, the sensor is connected to suitable power supply and signal processing means 23 and advantageously linked to the machine control system 24 of the fibre web machine (Figure 2). Wireless energy transmission and signal transmission techniques are advantageously used. Wiring can also be used. Moreover, energy can be generated from the rotation of the suction roll, and even a battery will have a lifetime as long as the servicing interval of the suction roll, even more than one servicing interval. The machine control system 24 can have a connection to a cloud service 25, for example for arranging remote maintenance. The indicator means provide continuous information on the state of the sealing arrangement and especially on the state of the seal without stopping or opening the suction roll.

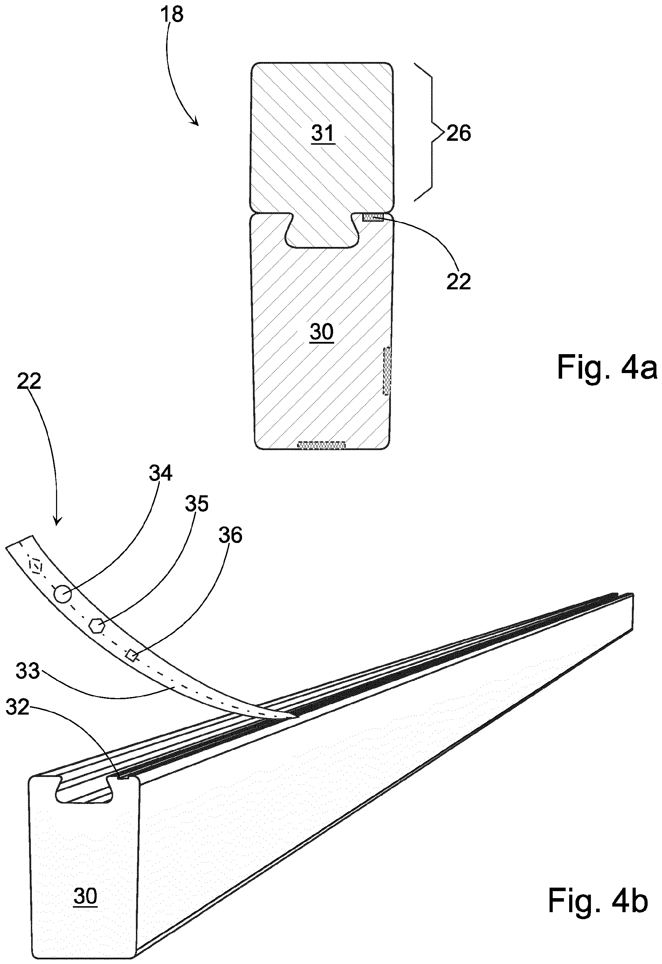

Figures 3a and 3b show in more detail the sealing arrangement according to the invention, where the sealing arrangement includes a seal holder 17 and a seal 18 adapted in the seal holder 17. The sealing arrangement also includes indicator means 19 adapted to define the wear margin 26 of the seal 18 (Figure 4a). According to the invention, the indicator means 19 include indicator material 21 and a sensor 22 adapted to detect the indicator material 21, where one of those is arranged in connection with the seal 18 and the other of those is arranged in connection with the seal holder 17. It is easy to adapt the indicator material as part of the sealing arrangement. Moreover, the sensor detects the indicator material accurately despite surrounding structures. In other words, there is no need for an unobstructed visual contact or physical contact between the indicator means and the indicator material. Indication is therefore accurate, and the wear margin present at any given moment can be defined accurately.

The indicator material 21 is advantageously arranged in the seal holder 17, while the sensor 22 is in the seal 18 (Figure 3a). Firstly, the indicator material is easy to fasten to the seal holder. Secondly, when the sensor is in the seal, it is possible to obtain also other useful information on the seal. Generally speaking, the sensor and the indicator material are adapted so close to each other that the sensor certainly detects the indicator material, and the mutual movement of the sensor and the indicator material can be converted accurately to indicate the wear margin of the seal.

In its simplest configuration, a sensor 22 is arranged at both ends of the seal 18 and at the middle of the seal 18. In this case, three sensors are used, each with its own indicator material. Several sensors give more accurate information on the wear margin at the various points of the seal than a single sensor. At the same time, it can be ensured that the seal moves evenly in the seal holder. Accuracy can be increased further by increasing the number of sensors and indicator material. In Figure 3b, the indicator material is inside the seal 18, while the sensor 22 is in the seal holder 17. The next sensor 22 placed in a different place is indicated by a broken line.

One advantageous indicator material 21 is a permanent magnet 27. The properties of a permanent magnet are stable, and a permanent magnet works without external energy. Moreover, a permanent magnet can be detected accurately even in moist conditions. The permanent magnet 27 is advantageously a round piece, which produces the most even magnetic field to all directions. Round permanent magnets can also be located in a row in the direction of movement of the seal. The positioning of permanent magnets is most convenient by placing them in a band or a strip to be fastened to the seal holder. In this case, the distances between permanent magnets are positioned from the outset. Positioning in the direction of movement of the seal can also be done with a wide strip or band. The indicator material can also be an elongated piece, which is adapted in the longitudinal direction in accordance with the direction of movement 28 of the seal 18. With said setting, a magnetic field of a certain shape is created in the seal holder, with the main direction of the magnetic field being in the direction of movement of the seal. With such methods, the sensor detects most accurately a change in the position in accordance with the direction of movement, which improves the accuracy of defining the wear margin.

The indicator material and especially the permanent magnet can be detected with various types of sensors. As an example, an eddy current sensor is suitable for use in hot and moist conditions, and the detection length of an eddy current sensor is long. However, each sensor is advantageously composed of several HALL sensors bridged to each other. In this case, the movement of the seal can be determined computationally from the observations made by the different HALL sensors. In addition to the normal direction of movement, the movement of the seal can also be determined in the machine direction and axial direction. In this case, for example, the thermal expansion of the seal can be detected and therefore compensated for in the determination. On other hand, it is also possible to detect the tilting of the seal. Bridged HALL sensors can achieve an accuracy of decimals of millimetres. In practice, the wear margin of the seal is a few dozen millimetres. The sensor of Figure 3b has four bridged HALL sensors.

The permanent magnet and the HALL sensor are simple and small components, which are easy to place in the sealing arrangement. When the sealing arrangement is being manufactured, after the installation of the components the positions of the seal are defined for the electronics, both when the seal is new and when it is worn out. In this case, the indicator means can be used for determining the position of the seal during the entire lifetime, and hence define the wear margin, in other words the remaining lifetime. When replacing the seal, the properties of the sealing arrangement must be defined so that the required accuracy can be achieved. In this case, it is possible to obtain information on the type of the seal and sensors directly to the system. At the same time, it is possible to avoid the installation of incorrect types of seals in the suction roll.

The permanent magnet 27 can be, for example, glued to the seal holder 17 that is made of fibre-reinforced plastic composite (Figure 3a). Correspondingly, the sensor 22 can be inserted in the base material of the seal 18 when the seal is being made by pouring (Figure 3b). In the application of Figure 4a, the seal 18 includes a seal body 30 and a wearing part 31 fastened to the seal body 30 in a detachable manner, in which case the sensor 22 is placed between the seal body 30 and the wearing part 31. More precisely, the sensor 22 is placed on the surface of the seal body 30, which is advantageous especially in the sensoring of temperature. In this case, the wearing part can be replaced while the sensor remains fastened to the seal body. At the same time, it is possible to bring the sensor as close to the point of contact of the seal and the shell as possible. The application presented contains a groove 32 in the seal body 30, into which groove 32 the sensor can be installed and finally fastened in a water-tight manner, for example by filling the groove with epoxy. Figure 4a also shows two alternative locations for the sensors in the seal body 30. Of these locations, the one underneath the seal body 30 is best protected when replacing the wearing part. There are also loading means between the seal holder and the seal body, with which loading means the seal is pressed to the inner surface of the shell. The seal holder can also have locking means, with which the seal can be taken slightly out of contact from the surface of the shell. A small gap reduces friction and noise without impairing the sealing capability of the seal.

In the application of Figure 4b, several sensors 22 are arranged as a continuous band 33, which extends essentially over the length of the entire seal 18. The uniform band also contains the necessary conductors for the sensors. Such a band is thin and easy to adapt in the seal. At the same time, separate conductors are avoided. Moreover, the band is flexible. In the figure, part of the band 33 is shown while lifted up from the groove 32 and magnified. Individual components are almost microscopic. Membrane semiconductors can also be used.

In addition to HALL sensors, other sensors, too, can be included in the indicator means. The sensor 22 can include an acceleration sensor 34. In this case, it is possible to detect vibration of the seal, which may be the result of issues such as eccentricity of the shell. The eccentricity may be due to local wear or impending bearing damage. On the other hand, the sensor 22 can include a pressure sensor 35. In this case, it is possible to determine the force with which the seal is pressed against the surface of the shell. Reversely, the observation can then be used for the adjustment of the loading devices. Pressure sensors can also be used for finding out the pressure profile, which can be used for determining, for example, the even loading of the seal over the length of the entire suction roll. Moreover, the sensor 22 can include a temperature sensor 36. In this case, it is possible to find out the temperature of the seal, and hence lubrication showers, for example, can be adjusted. In practice, when the temperature of the seal rises, it is possible to add lubrication showers to cool the seal. When the temperature has returned to normal, it is possible to reduce lubrication to decrease water consumption.

The sealing arrangement according to the invention can be adapted easily in different operating applications. The components used are applicable to hot and moist conditions. Moreover, the determination accuracy achieved with the indicator means is good. By using a certain type of a seal, it is sufficient to replace just the wearing part while the sensors and the indicator material remain unchanged. In this case, it must be ensured that a correct type of a wearing part is installed in the sealing arrangement.

## Claims

1. A sealing arrangement, which includes a seal holder (17) and a seal (18) adapted in the seal holder (17) as well as indicator means (19) adapted to define the wear margin (26) of the seal (18),
wherein
the indicator means (19) include indicator material (21) and a sensor (22) adapted to detect the sensor material (21), where one of those is arranged in connection with the seal (18) and the other of those is arranged in connection with the seal holder (17),
**characterised in that**
the indicator material (21) is arranged in the seal holder (17), while the sensor (22) is in the seal (18).

2. A sealing arrangement according to claim 1, **characterised in that**
a sensor (22), in the length direction of the seal (18), is arranged at both ends of the seal (18) and at the middle of the seal (18).

3. A sealing arrangement according to any one of the claims 1 - 2, **characterised in that**
several sensors (22) are arranged as a continuous band (33), which extends essentially over the length of the entire seal (18).

4. A sealing arrangement according to any one of the claims 1 - 3, **characterised in that**
the indicator material (21) is a permanent magnet (27).

5. A sealing arrangement according to claim 4, **characterised in that**
the permanent magnet (27) is an elongated piece, which is adapted in the longitudinal direction in accordance with the direction of movement (28) of the seal (18).

6. A sealing arrangement according to claim 4, **characterised in that**
the permanent magnet (27) is a round piece, and several permanent magnets (27) are adapted in a row in the seal (18).

7. A sealing arrangement according to any one of the claims 1 - 6, **characterised in that**
each sensor (22) is composed of several HALL sensors bridged to each other.

8. A sealing arrangement according to any one of the claims 1 - 7, **characterised in that**
the seal (18) includes a seal body (30) and a wearing part (31) fastened to the seal body (30) in a detachable manner, in which case the sensor (22) is placed between the seal body (30) and the wearing part (31).

9. A sealing arrangement according to claim 8, **characterised in that**
the sensor (22) is placed on the surface of the seal body (30) against the wearing part (31).

10. A sealing arrangement according to any one of the claims 1-9, **characterised in that**
the sensor (22) includes an acceleration sensor (34).

11. A sealing arrangement according to any one of the claims 1 - 10, **characterised in that**
the sensor (22) includes a pressure sensor (35).

12. A sealing arrangement according to any one of the claims 1 - 11, **characterised in that**
the sensor (22) includes a temperature sensor (36).

13. A suction roll of a fibre web machine, equipped with the sealing arrangement, where the suction roll (10) includes a perforated shell (14) supported in a rotating manner, a suction box (12) adapted inside the suction roll (10) and at least one sealing arrangement (16) in the suction box (12),
the at least one sealing arrangement (16) being the sealing arrangement according to any one of claims 1 - 12.

## Patentansprüche

1. Dichtungsanordnung, die einen Dichtungshalter (17) und eine in dem Dichtungshalter (17) angepasste Dichtung (18) sowie ein Anzeigemittel (19) hat, das angepasst ist, um den Verschleißrand (26) der Dichtung (18) zu definieren,
wobei
das Anzeigemittel (19) ein Anzeigematerial (21) und einen Sensor (22) hat, der zum Erfassen des Sensormaterials (21) angepasst ist, wobei eines von diesen in Verbindung mit der Dichtung (18) und das andere von diesen in Verbindung mit dem Dichtungshalter (17) angeordnet ist,
**dadurch gekennzeichnet, dass**
das Anzeigematerial (21) in dem Dichtungshalter (17) angeordnet ist, während sich der Sensor (22) in der Dichtung (18) befindet.

2. Dichtungsanordnung nach Anspruch 1, **dadurch gekennzeichnet, dass** in Längsrichtung der Dichtung (18) ein Sensor (22) an beiden Enden der Dichtung (18) und in der Mitte der Dichtung (18) angeordnet ist.

3. Dichtungsanordnung nach einem der Ansprüche 1 - 2, **dadurch gekennzeichnet, dass**
mehrere Sensoren (22) als ein durchgehendes Band (33) angeordnet sind, das sich im Wesentlichen über die Länge der gesamten Dichtung (18) erstreckt.

4. Dichtungsanordnung nach einem der Ansprüche 1 bis 3, **dadurch gekennzeichnet, dass**
das Anzeigematerial (21) ein Permanentmagnet (27) ist.

5. Dichtungsanordnung nach Anspruch 4, **dadurch gekennzeichnet, dass**
der Permanentmagnet (27) ein längliches Stück ist, das in Längsrichtung entsprechend der Bewegungsrichtung (28) der Dichtung (18) angepasst ist.

6. Dichtungsanordnung nach Anspruch 4, **dadurch gekennzeichnet, dass**
der Permanentmagnet (27) ein rundes Stück ist, und mehrere Permanentmagnete (27) in einer Reihe in der Dichtung (18) angeordnet sind.

7. Dichtungsanordnung nach einem der Ansprüche 1 bis 6, **dadurch gekennzeichnet, dass**
jeder Sensor (22) aus mehreren miteinander gebrückten HALL-Sensoren zusammengesetzt ist.

8. Dichtungsanordnung nach einem der Ansprüche 1 bis 7, **dadurch gekennzeichnet, dass**
die Dichtung (18) einen Dichtungskörper (30) und ein an dem Dichtungskörper (30) lösbar befestigtes Verschleißteil (31) aufweist, in welchem Fall der Sensor (22) zwischen dem Dichtungskörper (30) und dem Verschleißteil (31) angeordnet ist.

9. Dichtungsanordnung nach Anspruch 8, **dadurch gekennzeichnet, dass**
der Sensor (22) auf der Oberfläche des Dichtungskörpers (30) gegenüber dem Verschleißteil (31) angeordnet ist.

10. Dichtungsanordnung nach einem der Ansprüche 1 bis 9, **dadurch gekennzeichnet, dass**
der Sensor (22) einen Beschleunigungssensor (34) aufweist.

11. Dichtungsanordnung nach einem der Ansprüche 1 bis 10, **dadurch gekennzeichnet, dass**
der Sensor (22) einen Drucksensor (35) aufweist.

12. Dichtungsanordnung nach einem der Ansprüche 1 bis 11, **dadurch gekennzeichnet, dass**
der Sensor (22) einen Temperatursensor (36) aufweist.

13. Saugwalze einer Faserbahnmaschine, die mit der Dichtungsanordnung ausgestattet ist, wobei die Saugwalze (10) einen rotierend gelagerten Lochmantel (14), einen innerhalb der Saugwalze (10) angeordneten Saugkasten (12) und mindestens eine Dichtungsanordnung (16) in dem Saugkasten (12) aufweist, wobei
die mindestens eine Dichtungsanordnung (16) die Dichtungsanordnung nach einem der Ansprüche 1 bis 12 ist.

## Revendications

1. Agencement d'étanchéité, qui comprend un support de joint (17) et un joint d'étanchéité (18) adapté au support de joint (17) ainsi que des moyens d'indication (19) conçus pour définir la marge d'usure (26) du joint d'étanchéité (18),
dans lequel
les moyens d'indication (19) comprennent un matériau d'indication (21) et un capteur (22) conçu pour détecter le matériau de détection (21), l'un d'entre eux étant disposé en relation avec le joint d'étanchéité (18) et l'autre étant disposé en relation avec le support de joint (17),
**caractérisé en ce que**
le matériau d'indication (21) est disposé dans le support de joint (17), tandis que le capteur (22) se trouve dans le joint d'étanchéité (18).

2. Agencement d'étanchéité selon la revendication 1, **caractérisé en ce que**
un capteur (22), dans le sens de la longueur du joint d'étanchéité (18), est disposé aux deux extrémités du joint d'étanchéité (18) et au milieu du joint d'étanchéité (18).

3. Agencement d'étanchéité selon l'une quelconque des revendications 1 et 2, **caractérisé en ce que**
plusieurs capteurs (22) sont disposés en une bande continue (33), qui s'étend essentiellement sur toute la longueur du joint d'étanchéité (18).

4. Agencement d'étanchéité selon l'une quelconque des revendications 1 à 3, **caractérisé en ce que**
le matériau d'indication (21) est un aimant permanent (27).

5. Agencement d'étanchéité selon la revendication 4, **caractérisé en ce que**
l'aimant permanent (27) est une pièce allongée, qui est adaptée dans la direction longitudinale en accord avec la direction de déplacement (28) du joint d'étanchéité (18).

6. Agencement d'étanchéité selon la revendication 4, **caractérisé en ce que**
l'aimant permanent (27) est une pièce ronde, et plusieurs aimants permanents (27) sont disposés en rangée dans le joint d'étanchéité (18).

7. Agencement d'étanchéité selon l'une quelconque des revendications 1 à 6, **caractérisé en ce que**
chaque capteur (22) est constitué de plusieurs capteurs à effet Hall associés entre eux.

8. Agencement d'étanchéité selon l'une quelconque des revendications 1 à 7, **caractérisé en ce que**
le joint d'étanchéité (18) comprend un corps de joint (30) et une partie d'usure (31) fixée au corps de joint (30) de façon détachable, dans lequel le capteur (22) est placé entre le corps de joint (30) et la partie d'usure (31).

9. Agencement d'étanchéité selon la revendication 8, **caractérisé en ce que** le capteur (22) est placé sur la surface du corps de joint (30) contre la partie d'usure (31).

10. Agencement d'étanchéité selon l'une quelconque des revendications 1 à 9, **caractérisé en ce que**
le capteur (22) comprend un capteur d'accélération (34).

11. Agencement d'étanchéité selon l'une quelconque des revendications 1 à 10, **caractérisé en ce que**
le capteur (22) comprend un capteur de pression (35).

12. Agencement d'étanchéité selon l'une quelconque des revendications 1 à 11, **caractérisé en ce que**
le capteur (22) comprend un capteur de température (36).

13. Rouleau d'aspiration d'une machine à toile de fibres, équipée de l'agencement d'étanchéité, dans lequel le rouleau d'aspiration (10) comprend une enveloppe perforée (14) supportée de manière rotative, un boîtier d'aspiration (12) disposé à l'intérieur du rouleau d'aspiration (10) et au moins un agencement d'étanchéité (16) dans le boîtier d'aspiration (12),
l'au moins un agencement d'étanchéité (16) étant l'agencement d'étanchéité selon l'une quelconque des revendications 1 à 12.
